# FASCICULE DE BREVET EUROPEEN

(11) **EP 0 503 415 B1**
(45) Date de publication et mention de la délivrance du brevet: **06.09.1995**
(21) Numéro de dépôt: 92103529.1
(22) Date de dépôt: 02.03.1992
(51) Int. Cl.: H02G 15/14, H02G 15/007

(54) **Dispositif de raccordement de fils d'armure de deux cables armés**
Vorrichtung zum Verbinden von Bewehrungsdrähten von zwei bewehrten Kabeln
Device for connecting armoured wires of two armoured cables

(30) Priorité: 08.03.1991 FR 9102815
(43) Date de publication de la demande: 16.09.1992
(73) Titulaire: ALCATEL CABLE, 92111 Clichy Cédex (FR)
(72) Inventeur: Vasseur, Edouard, F-62222 Saint Martin les Boulogne (FR)
(74) Mandataire: Weinmiller, Jürgen

(56) Documents cités:
- EP-A- 0 235 891
- EP-A- 0 347 823
- DE-C- 516 175
- US-A- 1 863 021

## Description

La présente invention porte sur les dispositifs de raccordement de fils d'armure de câbles armés, assurant la continuité de résistance mécanique autour d'une jonction des conducteurs électriques et/ou optiques de deux câbles.

Ces câbles sont des câbles d'énergie ou de télécommunication, en particulier des câbles sous-marins de grande profondeur. Ils sont à armure de fils métalliques devant supporter de grands efforts de traction et résister au contact d'objets divers, tels que ancres et engins de pêche pour les câbles de profondeur moyenne, ou à des pressions élevées pour les câbles de grande profondeur.

On connaît notamment par le document FR-A-2633462 un dispositif de raccordement de fils d'armure de deux câbles, dit du type à serrage conique. Dans ce dispositif, les armures de chacun des deux câbles sont enserrées entre un couple de pièces coniques épaulées. Ces pièces coniques sont reliées à des pièces analogues montées sur chacune des deux extrémités d'une armure reconstituée autour de la jonction des conducteurs de ces deux câbles. Cette liaison est assurée par des tiges filetées bloquées à l'aide d'écrous dans les épaulements des deux couples de pièces coniques en regard l'un de l'autre. Ces tiges filetées évitent que les pièces coniques de ces deux couples glissent sur les armures et se desserrent, lors d'une traction exercée sur les câbles.

Le document EP-A-0 235 891 décrit également un dispositif correspondant au préambule de la revendication 1.

La présente invention a pour but de permettre une mise en oeuvre plus simple et l'obtention d'un serrage renforcé des pièces de raccordement des fils d'armure de deux câbles.

Le dispositif de raccordement des fils d'armure de deux câbles armés, du type à pièces coniques de serrage entre elles des fils d'armure de chacun desdits câbles, est caractérisé en ce qu'il comporte un support cylindrique, à partie centrale épaulée extérieurement, de section en forme de T, percée de trous communiquant entre eux et débouchant d'une part sur sa périphérie et d'autre part sur l'un et l'autre de ses côtés latéraux, sous les branches latérales de section en T, ledit support étant monté autour des extrémités hors armure desdits câbles et de ladite jonction et recevant sur lui les bagues intérieures des deux jeux de pièces coniques, en ce que lesdites bagues intérieures sont montées mobiles sur ledit support de part et d'autre de ladite partie centrale et les cônes extérieurs desdits deux jeux de pièces coniques sont reçus et fixés sur la périphérie de ladite partie centrale, et en ce qu'il comporte, un matériau de serrage à pression et de blocage, remplissant au moins l'espace ou chambre de pression entre ladite partie centrale du support et lesdites bagues intérieures, en formant un moyen de serrage à pression intégré audit dispositif et constituant lesdits moyens de maintien de serrage.

Le dispositif selon l'invention présente en outre l'une ou l'autre des particularités suivantes :
- ledit matériau est injecté à pression par l'un desdits trous débouchant sur la périphérie de ladite partie centrale, pour la mise sous pression et le maintien à une pression souhaitée de ladite chambre de pression, jusqu'au blocage desdites bagues intérieures sur ledit support par ledit matériau, ce matériau étant en particulier une résine polymérisable ou un alliage métallique à bas point de fusion,
- les bagues intérieures mobiles ont un épaulement terminal, sur leur extrémité de plus grand diamètre, s'encastrant latéralement sous les branches latérales de section en T de la partie centrale du support,
- les fils d'armure de chaque câble étant en au moins deux couches superposées, le dispositif comporte en outre au moins une bague conique intermédiaire appartenant à chaque jeu de pièces coniques, montée entre deux couches successives desdites couches superposées de fils d'armure, avec son extrémité de plus grand diamètre tournée vers la partie centrale dudit support, chaque bague intermédiaire étant avantageusement fendue sur sa longueur ou préfendue sur sa longueur ou constituée par plusieurs secteurs identiques,
- ledit support est en métal de haute résistance et est constitué en une seule pièce ou par deux demi-coquilles,
- la partie centrale du support est filetée sur sa périphérie et reçoit les cônes extérieurs qui se vissent sur elle.

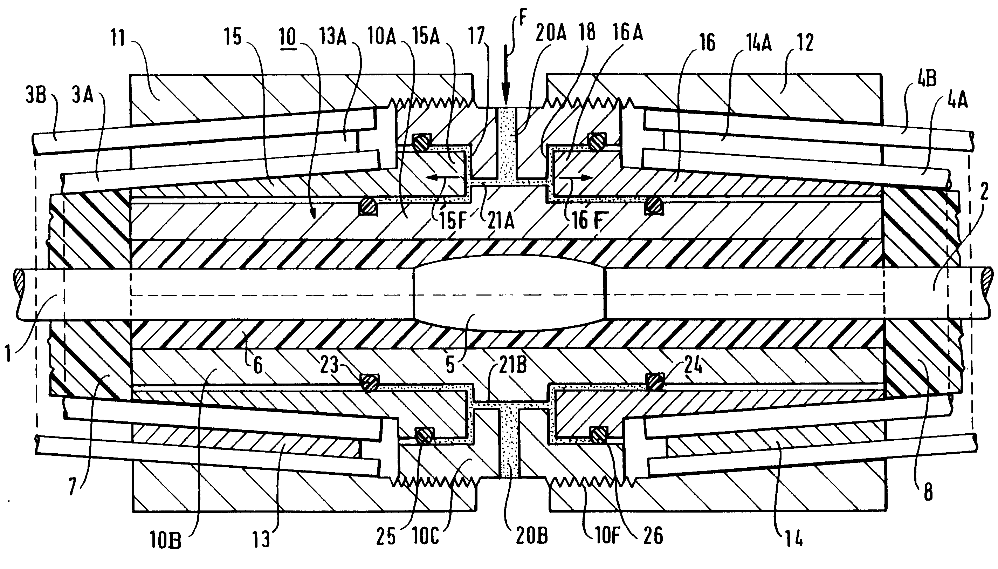

Les caractéristiques et avantages de la présente invention ressortiront clairement de la description faite ci-après d'un exemple de réalisation illustré dans la figure unique du dessin ci-annexé.

Dans cette figure unique, on a montré deux câbles 1 et 2, l'un et l'autre armés par deux couches de fils d'acier 3A, 3B et 4A, 4B selon le câble, ces câbles ayant leurs fils d'armure raccordés par le dispositif selon l'invention.

Une jonction 5 entre les deux extrémités hors armure des deux câbles assure le raccordement de leurs conducteurs électriques et/ou optiques et de leur enveloppe extérieure. De préférence, un rubannage, ou analogue, isolant 6 entoure les extrémités sans armure des deux câbles et la jonction 5, et deux manchons coniques 7 et 8 également isolants sont enfilés de part et d'autre du rubannage sous les couches internes de fils d'armure 3A, 4A pour éviter que les fils forment un angle trop vif susceptible d'endommager l'enveloppe du câble.

Ces câbles peuvent avoir un nombre de couches de fils d'armure supérieur à deux, en particulier lorsque ces câbles sont des câbles sous-marins de grande profondeur.

Le dispositif de raccordement des fils d'armure selon l'invention comporte :
- un support cylindrique 10, de haute résistance, entourant les extrémités sans armure des deux câbles et la jonction 5, elles-mêmes recouvertes de préférence par le rubannage 6,
- deux jeux de pièces coniques pour ces deux câbles, avec chaque jeu constitué, selon le câble 1 ou 2 considéré, par un cône extérieur 11 ou 12 fixé sur la périphérie du support 10, au moins une bague conique intermédiaire 13 ou 14 placée entre les différentes couches de fils d'armures 3A, 3B ou 4A, 4B de chaque câble, et une bague conique intérieure 15 ou 16, mobile le long du support 10 qu'elle entoure,
- et un matériau de blocage des bagues coniques intérieures 15 et 16 sur le support 10 et de serrage à pression des fils d'armure 3A, 3B et 4A, 4B dans chaque jeu de pièces coniques, ainsi qu'illustré en 17 et 18.

Le support cylindrique 10 est en métal de haute résistance et en particulier en acier. Il est de préférence réalisé par deux demi-coquilles identiques 10A, 10B pour son montage sur les extrémités des câbles déjà raccordées dans la jonction 5.

Ce support cylindrique 10 a sa partie centrale 10C épaulée, présentant une section en T. Cette partie centrale 10C est filetée sur sa périphérie 10F, tout au moins sur les portions terminales de cette partie centrale. Elle est en outre percée de trous, pour présenter deux trous axiaux opposés notés 20A et 20B qui débouchent sur sa périphérie entre les parties filetées 10F et s'étendent sensiblement à mi longueur du jambage central du T de section, et deux trous notés 21A et 21B à travers le jambage central du T de section, au bout des deux trous 20A et 20B, respectivement, qui débouchent sur chacun des deux côtés de ce jambage central.

Ces trous permettent l'injection du matériau de blocage et de serrage à pression illustré en 17 et 18, comme il est précisé ci-après.

Les cônes extérieurs 11 et 12 ont leur surface extérieure cylindrique ; leur surface intérieure est conique à l'exception de leur partie terminale de plus grand diamètre intérieur rendue cylindrique et adaptée au diamètre extérieur de la partie centrale 10C du support 10. Cette partie terminale cylindrique est filetée intérieurement. Elle est vissée sur la périphérie filetée 10F de la partie centrale 10C.

Les bagues intermédiaires 13 et 14 sont quant à elles d'épaisseur constante. Chacune d'elles est à génératrices de ses surfaces extérieure et intérieure, qui sont parallèles l'une à l'autre mais obliques par rapport à l'axe des câbles. Ces bagues intermédiaires ont leur ouverture de grand diamètre tournée vers la partie centrale du support. Elles sont en outre fendues et présentent une seule fente 13A ou 14A sur toute leur longueur ou sont préfendues longitudinalement ou constituées en plusieurs parties ou segments sensiblement identiques entre eux, pour définir deux fentes symétriques ou plusieurs fentes espacées régulièrement sur chacune d'elles.

Les bagues coniques intérieures 15 et 16 ont leur surface intérieure cylindrique et adaptée au diamètre du support 10 sur lequel elles coulissent de part et d'autre de la partie centrale de ce support. Elles ont leur surface extérieure conique avec leur extrémité de plus grand diamètre extérieur tournée vers la partie centrale 10C du support 10 et formant un large épaulement terminal 15A ou 16A sur chacune d'elles. Ces épaulements terminaux sont de dimensions correspondant sensiblement à celles des deux échancrures latérales définies entre les branches latérales de la partie centrale 10C de section en T et le support 10, dans lesquelles elles s'encastrent l'une et l'autre, respectivement.

Dans le dispositif, deux joints 23 ou 24 et 25 ou 26 sont montés entre chaque bague intérieure mobile 15 ou 16 et d'une part le support 10 et d'autre part sa partie centrale 10C, pour l'étanchéité sur l'intérieur et l'extérieur de chacune de ces bagues.

La mise en oeuvre du dispositif selon l'invention est réalisée comme indiqué ci-après.

Les extrémités des deux câbles étant mises hors armure, on enfile les deux jeux de pièces coniques précités sur les câbles et éventuellement le support 10, si celui-ci est en une seule pièce, sur l'un des câbles, avant leur raccordement dans la jonction 5. La jonction 5 étant réalisée et le rubannage 6 et les deux manchons 7 et 8 éventuels mis en place, on rapporte en centrant sur l'extérieur de la jonction 5 les deux demi-coquilles 10A et 10B du support 10, ou on positionne sur la jonction le support d'une seule pièce précédemment enfilé sur l'un des câbles. On positionne ensuite de chaque côté, la bague conique intérieure mobile 15 ou 16, la ou les bagues intermédiaires 13 ou 14 et le cône extérieur 11 ou 12, dans l'ordre, en plaçant les fils d'armure de part et d'autre des bagues intermédiaires fendues.

On immobilise alors en position les pièces coniques de chaque jeu et d'un jeu à l'autre, en vissant les cônes extérieurs 11 et 12 sur la périphérie filetée 10F de la partie centrale 10C du support 10, de façon à obtenir un léger serrage des fils d'armures. On remplit ensuite l'espace dit chambre interne de pression, entre la partie centrale 10C du support 10 et l'épaulement terminal 15A ou 16A de chaque bague intérieure 15 ou 16 mobile sur le support 10, par injection du matériau de blocage et de serrage par l'un des trous débouchant sur la périphérie de la partie centrale 10C, comme traduit par la flèche F associée au trou 20A. L'air présent initialement dans les trous 20A, 21A, 21B et 20B et dans la chambre interne de pression est chassé par le trou 20B tandis que l'ensemble est rempli. On met cette chambre interne sous pression, de façon à faire écarter l'une de l'autre les deux bagues intérieures mobiles 15 et 16, selon les flèches opposées 15F et 16F, et à obtenir une force importante de serrage de ces bagues intérieures sur les bagues intermédiaires et les cônes extérieurs, avec les fils d'armures entre eux.

Ce matériau de blocage et de serrage est une résine polymérisable ou un alliage métallique à bas point de fusion.

Cette mise sous pression de la chambre interne peut être obtenue en injectant éventuellement le matériau également par l'autre trou 20B, après évacuation de l'air intérieur.

On ajuste la pression pour l'obtention du serrage désiré et on la maintient jusqu'au blocage final c'est-à-dire jusqu'à la polymérisation de la résine ou la solidification de l'alliage métallique. Le dispositif est alors bloqué en position serrée sur les fils d'armure 3A, 3B et 4A, 4B des deux câbles 1 et 2.

Le dispositif à pièces coniques de serrage des fils d'armure est ainsi rendu à serrage hydraulique intégré, restant en place dans la structure finale. Il évite toute précontrainte extérieure initiale, qu'il était nécessaire d'appliquer sur les pièces coniques dans les dispositifs antérieurs connus, pour la mise en place de leurs systèmes à tiges filetées et écrous avant la suppression de cette précontrainte initiale.

Ce serrage intégré dans le dispositif de l'invention continue à maintenir en place les pièces, pour une plus grande sécurité. Il est en outre de mise en oeuvre très simple du dispositif de raccordement final résultant.

L'invention a été décrite en regard de l'exemple illustré dans le dessin. Il est évident que l'on peut y apporter des modifications de détail sans pour autant sortir du cadre de l'invention. En particulier, on note que le nombre de bagues intermédiaires pour chaque armure de câble dépend du nombre de couches de fils d'armure qu'elles séparent. On note également que le mode d'injection sous pression et le réglage de la pression à une valeur convenable, pour l'obtention du serrage désiré, avant et au cours de la polymérisation de la résine, ne sont pas illustrés et décrits en détail, car en tant que tels à portée de l'homme de l'art.

## Revendications

1. Dispositif de raccordement de fils d'armure de deux câbles armés (1, 2), monté sur les extrémités des deux câbles raccordés hors armure dans une jonction (5), comportant deux jeux de pièces coniques de serrage entre elles des fils d'armure de l'un et l'autre desdits câbles, respectivement, et des moyens de maintien de serrage desdites pièces coniques sur lesdits fils d'armure, lesdites pièces coniques de chaque jeu étant dites cône extérieur (11, 12) et bague intérieure (15, 16) pour les deux extrêmes d'entre elles autour de l'axe desdits câbles (1, 2), caractérisé en ce qu'il comporte un support cylindrique (10), à partie centrale (10C) épaulée extérieurement, de section en forme de T, percée de trous (20A, 20B, 21A, 21B) communiquant entre eux et débouchant d'une part sur sa périphérie et d'autre part sur l'un et l'autre de ses côtés latéraux, sous les branches latérales de section en T, ledit support étant monté autour des extrémités hors armure desdits câbles (1, 2) et de ladite jonction (5) et recevant sur lui les bagues intérieures (15, 16) des deux jeux de pièces coniques, en ce que lesdites bagues intérieures (15, 16) sont montées mobiles sur ledit support (10) de part et d'autre de ladite partie centrale (10C) et les cônes extérieurs (11, 12) desdits deux jeux de pièces coniques sont reçus et fixés sur la périphérie (10F) de ladite partie centrale (10C), et en ce qu'il comporte un matériau (17,18) de serrage à pression et de blocage remplissant au moins l'espace dit chambre de pression entre ladite partie centrale (10C) du support (10) et lesdites bagues intérieures (15, 16) en formant un moyen de serrage à pression intégré audit dispositif et constituant lesdits moyens de maintien de serrage.

2. Dispositif selon la revendication 1, caractérisé en ce que ledit matériau est injecté à pression par l'un desdits trous (20A) débouchant sur la périphérie de ladite partie centrale (10), pour la mise sous pression et le maintien à une pression souhaitée de ladite chambre de pression, jusqu'au blocage desdites bagues intérieures sur ledit support par ledit matériau (17, 18).

3. Dispositif selon la revendication 2, caractérisé en ce que ledit matériau est une résine polymérisable.

4. Dispositif selon la revendication 2, caractérisé en ce que ledit matériau est un alliage métallique à bas point de fusion.

5. Dispositif selon l'une des revendications 1 à 4, caractérisé en ce que lesdites bagues intérieures mobiles (15, 16) sont de surface intérieure cylindrique, adaptée au diamètre dudit support (10) sur lequel elles coulissent, et présentent un épaulement terminal (15A, 16A), à leur extrémité de plus grand diamètre tournée vers ladite partie centrale du support (10), s'encastrant sous les branches latérales de section en T de ladite partie centrale.

6. Dispositif selon la revendication 5, caractérisé en ce qu'il comporte des joints d'étanchéité (23-26) montés entre chacune desdites bagues intérieures mobiles (15, 16) et d'une part ledit support (10) et d'autre part les branches latérales de ladite partie centrale (10C) de section en T.

7. Dispositif selon l'une des revendications 1 à 6, avec lesdits câbles (1, 2) présentant l'un et l'autre lesdits fils d'armure en au moins deux couches superposées, caractérisé en ce qu'il comporte en outre au moins une bague conique intermédiaire (13, 14) appartenant à chaque jeu de pièces coniques, montée entre deux couches successives desdites couches superposées de fils d'armure, avec son extrémité de plus grand diamètre tournée vers la partie centrale (10C) dudit support (10).

8. Dispositif selon la revendication 7, caractérisé en ce que chacune desdites bagues intermédiaires (13, 14) desdits jeux de pièces coniques est d'épaisseur sensiblement constante et de génératrices de sa surface intérieure et extérieure sensiblement parallèles entre elles et obliques par rapport à l'axe desdits câbles.

9. Dispositif selon l'une des revendications 7 et 8, caractérisé en ce que chacune des bagues intermédiaires (13, 14) desdits jeux de pièces coniques présente une fente longitudinale (13A, 14A) ou est préfendue régulièrement et sur toute sa longueur ou constituée en plusieurs parties identiques les unes aux autres.

10. Dispositif selon l'une des revendications 1 à 9, caractérisé en ce que ledit support (10) est en métal de haute résistance.

11. Dispositif selon la revendication 10, caractérisé en ce que ledit support (10) est constitué par deux demi-coquilles identiques.

12. Dispositif selon l'une des revendications 10 et 11, caractérisé en ce que lesdits trous dans ladite partie centrale (10C) dudit support sont constitués par au moins un trou axial (20A, 20B), débouchant sur sa périphérie, et au moins un trou transversal (21A, 21B) au jambage central de la section en T communiquant avec chaque trou axial.

13. Dispositif selon l'une des revendications 10 à 12, caractérisé en ce que ladite partie centrale (10C) dudit support (10) est filetée sur sa périphérie (10F) et en ce que lesdits cônes extérieurs ont leur surface intérieure conique, à l'exception de leur partie terminale de plus grand diamètre rendue cylindrique et présentant un filetage se vissant sur ladite partie centrale (10C) dudit support (10).

## Patentansprüche

1. Vorrichtung zur Verbindung der Bewehrungsdrähte von zwei bewehrten Kabeln (1, 2), die auf die Enden der beiden Kabel montiert ist, die ohne die Bewehrung in einer Verbindungsstelle (5) miteinander verbunden sind, mit zwei Sätzen von konischen Bauteilen, um zwischen ihnen Bewehrungsdrähte des einen bzw. des anderen der Kabel einzuklemmen, und mit Mitteln, um die Klemmwirkung der konischen Bauteile auf den Bewehrungsdrähten aufrechtzuerhalten, wobei die konischen Bauteile jedes Satzes einen äußeren Kegelstumpf (11, 12) und einen Innenring (15, 16) aufweisen, dadurch gekennzeichnet, daß die Vorrichtung einen zylindrischen Träger (10) mit einem eine nach außen weisende Schulter enthaltenden zentralen Bereich (10C) T-förmigen Querschnitts, der mit Löchern (20A, 20B, 21A, 21B) versehen ist, die miteinander in Verbindung stehen und einerseits auf dem Umfang des Trägers und andererseits auf den beiden Seitenflächen des zentralen Bereichs unter den Seitenarmen mit T-förmigem Querschnitt münden, wobei der Träger um die unbewehrten Enden der Kabel (1, 2) und der Verbindungsstelle (5) montiert ist und auf ihn die Innenringe (15, 16) der beiden Sätze von konischen Bauteilen aufgesteckt sind, daß die Innenringe (15, 16) beweglich auf dem Träger (10) zu beiden Seiten des zentralen Bereichs (10C) angeordnet sind und die äußeren Kegelstümpfe (11, 12) der beiden Sätze von konischen Bauteilen auf dem Umfang (10F) des zentralen Bereichs liegen und befestigt sind, und daß ein Material (17, 18) zum Komprimieren und zum Blockieren vorgesehen ist, das mindestens den Druckkammer genannten Raum zwischen dem zentralen Bereich (10C) des Trägers (10) und den Innenringen (15, 16) füllt, indem es ein in die Vorrichtung integriertes Kompressionsmittel und die Mittel zur Aufrechterhaltung des Zusammenpressens bildet.

2. Vorrichtung nach Anspruch 1, dadurch gekennzeichnet, daß das Material unter Druck durch eines der Löcher (20A) eingefüllt wird, die auf dem Umfang des zentralen Bereichs (10) münden, um die Druckkammer bis zur Blockierung der Innenringe auf dem Träger durch dieses Material (17, 18) unter einen gewünschten Druck zu setzen und zu halten.

3. Vorrichtung nach Anspruch 2, dadurch gekennzeichnet, daß dieses Material ein polymerisierbares Harz ist.

4. Vorrichtung nach Anspruch 2, dadurch gekennzeichnet, daß dieses Material eine Metallegierung mit niedrigem Schmelzpunkt ist.

5. Vorrichtung nach einem der Ansprüche 1 bis 4, dadurch gekennzeichnet, daß die beweglichen Innenringe (15, 16) eine zylindrische Innenfläche haben, die dem Durchmesser des Trägers (10) angepaßt ist, auf dem sie gleiten, und eine Endschulter (15A, 16A) an ihrem Ende mit dem größeren Durchmesser aufweisen, das zum zentralen Bereich des Trägers (10) hin gerichtet ist, und daß die Endschulter unter die Seitenarme des T-förmigen Querschnitts des zentralen Bereichs des Trägers eingefügt sind.

6. Vorrichtung nach Anspruch 5, dadurch gekennzeichnet, daß sie Dichtungen (23-26) aufweist, die zwischen jedem beweglichen Innenring (15, 16) und dem Träger (10) bzw. den Seitenarmen des zentralen Bereichs (10C) montiert sind.

7. Vorrichtung nach einem der Ansprüche 1 bis 6, bei der die Kabel (1, 2) beide Bewehrungsdrähte in mindestens zwei übereinanderliegenden Schichten aufweisen, dadurch gekennzeichnet, daß sie außerdem mindestens einen konischen Zwischenring (13, 14) aufweist, der zu jedem Satz von konischen Bauteilen gehört und zwischen zwei aufeinanderfolgenden Schichten dieser übereinanderliegenden Schichten von Bewehrungsdrähten angeordnet ist, wobei das Ende größerem Durchmesser zum zentralen Bereich (10C) des Trägers gewandt ist.

8. Vorrichtung nach Anspruch 7, dadurch gekennzeichnet, daß die Zwischenringe (13, 14) der Sätze von konischen Bauteilen im wesentlichen konstante Dicke aufweisen und die Mantellinie ihrer Innen- und Außenfläche im wesentlichen zueinander parallel verlaufen und schräg in Bezug auf die Achse der Kabel liegen.

9. Vorrichtung nach einem der Ansprüche 7 und 8, dadurch gekennzeichnet, daß die Zwischenringe (13, 14) der Sätze von konischen Bauteilen einen Längsschlitz (13A, 14A) aufweisen oder regelmäßig der Länge nach vorgeschlitzt sind oder aus mehreren identischen Sektoren bestehen.

10. Vorrichtung nach einem der Ansprüche 1 bis 9, dadurch gekennzeichnet, daß der Träger (10) aus einem widerstandsfähigen Metall ist.

11. Vorrichtung nach Anspruch 10, dadurch gekennzeichnet, daß der Träger (10) aus zwei identischen Halbschalen besteht.

12. Vorrichtung nach einem der Ansprüche 10 und 11, dadurch gekennzeichnet, daß die Löcher im zentralen Bereich (10C) des Trägers aus mindestens einem axialen Loch (20A, 20B), das auf seinem Umfang mündet, und mindestens einem transversalen Loch (21A, 21B) am Mittelteil des T-förmigen Querschnitts bestehen, das mit jedem axialen Loch in Verbindung steht.

13. Vorrichtung nach einem der Ansprüche 10 bis 12, dadurch gekennzeichnet, daß der zentrale Bereich (10C) des Trägers (10) auf seinem Umfang ein Gewinde trägt und daß die Innenfläche der äußeren Kegelstümpfe konisch ist, mit Ausnahme ihres zylindrisch geformten Endbereichs größeren Durchmessers, der ein Gewinde aufweist, das auf den zentralen Bereich (10C) des Trägers (10) geschraubt ist.

## Claims

1. Device for connecting armour wires of two armoured cables (1, 2) mounted on the ends of two cables jointed outside the armouring by a splice (5), comprising two sets of conical parts clamping armour wires of respective cables between them and means for maintaining clamping of said conical parts on said armour wires, said conical parts of each set comprising outer cones (11, 12) and inner cones (15, 16) for both ends between them about. the axis of said cables (1, 2), characterised in that it includes a cylindrical part (10) with a central part (10C) having an exterior shoulder of T-section with holes (20A, 20B, 21A, 21B) communicating with each other and opening onto its periphery and onto both of its lateral sides, under the lateral branches of the T-section, said support being mounted around de-armoured ends of said cables (1, 2) and said splice (5) and receiving on it the inner rings (15, 16) of the two sets of conical parts, in that said inner rings (15, 16) are mobile on said support (10) on respective opposite sides of said central part (10C) and the outer cones (11, 12) of said two sets of conical parts are received and fixed to the periphery (10F) of said central part (10C), and in that it includes a pressure clamping and locking material (17, 18) filling at least a space forming a pressure chamber between said central part (10C) of the support (10) and said inner rings (15, 16) forming pressure clamping means integral with said device and constituting said clamping maintaining means.

2. Device according to claim 1 characterised in that said material is injected under pressure through one of said holes (20A) opening on to the periphery of said central part (10) for pressurising and maintaining a required pressure in said pressure chamber until said inner rings are locked onto said support by said material (17, 18).

3. Device according to claim 2 characterised in that said material is a polymerisable resin.

4. Device according to claim 2 characterised in that said material is a metal alloy having a low melting point.

5. Device according to any one of claims 1 to 4 characterised in that said mobile inner rings (15, 16) have a cylindrical inside surface matched to the diameter of said support (10) on which they slide and have a shoulder (15A, 16A) at their larger diameter end facing towards said central part of the support (10), fitting under the lateral branches of the T-section of said central part.

6. Device according to claim 5 characterised in that it includes O-rings (23-26) mounted between each of said mobile inner rings (15, 16) and, on the one hand, said support (10) and, on the other hand, the lateral branches of said T-section central part (10C).

7. Device according to any one of claims 1 to 6 with said cables (1, 2) both having armour wires in at least two superposed layers, characterised in that it further includes at least one intermediate conical ring (13, 14) which is part of each set of conical parts, mounted between two successive layers of said superposed layers of armour wires with its larger diameter end facing towards the central part (10C) of said support (10).

8. Device according to claim 7 characterised in that each of said intermediate rings (13, 14) of said set of conical parts has a substantially constant thickness and the generatrices of its inside and outside surfaces are substantially parallel to each other and oblique to the axis of said cables.

9. Device according to claim 7 or claim 8 characterised in that each intermediate ring (13, 14) of said sets of conical parts has a longitudinal slit (13A, 14A) or is preslit regularly and over all of its length or is made up of a plurality of identical parts.

10. Device according to any one of claims 1 to 9 characterised in that said support (10) is made from a high strength metal.

11. Device according to claim 10 characterised in that said support (10) comprises two identical half-shells.

12. Device according to claim 10 or claim 11 characterised in that said holes in said central part (10C) of said support comprise at least one axial hole (20A, 20B) opening onto its periphery and at least one hole (21A, 21B) transverse to the central leg of the T-section communicating with each axial hole.

13. Device according to any one of claims 10 to 12 characterised in that said central part (10C) of said support (10) is screwthreaded at its periphery (10F) and in that said outer cones have an inside surface which is conical except for its larger diameter end part which is cylindrical and has a screwthread adapted to screw onto said central part (10C) of said support (10).
